# EUROPEAN PATENT APPLICATION

(11) **EP 2 312 371 A1**
(43) Date of publication of application: **20.04.2011**
(21) Application number: 10187767.8
(22) Date of filing: 15.10.2010
(51) Int. Cl.: G02B 23/24

(54) **Articulating imager for video borescope**

(30) Priority: 15.10.2009 US 579470
(71) Applicant: Perceptron, Inc., Plymouth, MI 48170 (US)
(72) Inventor: Draper, Owen, Plymouth,, 48170 (US)
(74) Representative: Nilsson, Lars-Magnus

(57) **Abstract**

A borescope includes a flexible cable having a signal carrier disposed throughout a length of the flexible cable. An imager head illuminates an object proximate to the imager head. An articulating member is disposed between the flexible cable and the imager head. The articulating member includes a spring having a coiled wire defining a central cavity, and an axially incompressible member positioned in a spring central cavity extending from a connector attached to an end of the flexible cable to the imager head. The incompressible member permits angular deflection of the imager head with respect to the flexible cable while precluding axial compression of the coiled wire and individual coil-to-coil contact.

## Description

### FIELD

The present disclosure relates to borescopes and video scopes.

### BACKGROUND

This section provides background information related to the present disclosure which is not necessarily prior art.

Borescopes and video scopes used for inspecting visually obscure locations, also known as remote inspection devices, are typically tailored for particular applications. For instance, some remote inspection devices have been tailored for use by plumbers to inspect pipes and drains. Likewise, other types of remote inspection devices have been tailored for use by mechanics to inspect interior compartments of machinery being repaired.

The imager head of known borescopes can be articulated to remotely direct the imager head toward an object for viewing. The use of control wires extending the length of the flexible cable from the image viewing device to the imager head is also known. Known flexible cables for these applications commonly fall into two categories, a first design having multiple segments each having one or more control wire tubes created with the segment, or attached (for example by welding) to the individual segments that guide the control wires. The separate segments are commonly hinged or pinned to each other. Multiple segmented designs are expensive to produce and construct and limit the bend radius because the segments contact each other during bending of the cable. The second design replaces the multiple independent segments with a flexible spring that eliminates the pins or connections between segments and permits greater flexibility of the cable. These designs, however, permit the spring to compress axially as the cable bends, such that if the cable is manipulated into multiple bends the coils of the spring bind against each other, which significantly increases the force required to manipulate the imager head, increases frictional wear of the control wires, and can prevent an elastic return of the imager head back toward its null or straight position. Devices to reduce axial compression of the spring fixed to the spring coils prevent full range bending of the spring in at least a plane of the devices.

### SUMMARY

This section provides a general summary of the disclosure, and is not a comprehensive disclosure of its full scope or all of its features.

According to several embodiments, an articulating member disposed between a flexible cable and an imager head of a borescope includes a spring having multiple coils of wire defining a central cavity. A substantially axially incompressible member is freely positioned in a central cavity of the spring. The incompressible member permits angular deflection of the spring and the imager head with respect to the flexible cable while precluding coil-to-coil contact between any of the coils of the spring.

According to other embodiments, a borescope includes a flexible cable having a signal carrier disposed throughout a length of the flexible cable. An imager head illuminates an object proximate to the imager head. An articulating member is disposed between the flexible cable and the imager head. The articulating member includes a spring having a coiled wire defining a central cavity; and an axially incompressible member positioned in a spring central cavity extending from a connector attached to an end of the flexible cable to the imager head, the incompressible member permitting angular deflection of the imager head with respect to the flexible cable while precluding axial compression of the coiled wire resulting in individual coil-to-coil contact.

According to further embodiments, a borescope includes a flexible cable having a signal carrier disposed throughout a length of the flexible cable. An imager head provides for illuminating an object proximate to the imager head. An articulating member is disposed between the flexible cable and the imager head. The articulating member includes a spring having a coiled wire defining a central cavity and having multiple hoops of the coiled wire with successive ones of the hoops positioned at regular angular increments with respect to a next or preceding hoop. A substantially axially incompressible member is positioned in a central cavity of the spring extending from a connector attached to an end of the flexible cable to the imager head. The incompressible member permits angular deflection of the imager head with respect to the flexible cable while precluding axial compression of the coiled wire resulting in individual coil-to-coil contact.

According to still other embodiments, a borescope includes a flexible cable having a signal carrier disposed throughout a length of the flexible cable. An imager head provides for illuminating an object. An articulating member is disposed between the flexible cable and the imager head. The articulating member includes a spring having a coiled wire defining a central cavity; and a substantially axially incompressible member defining an extension spring positioned in a central cavity of the spring and extending from a connector attached to an end of the flexible cable to the imager head. The incompressible member permits angular deflection of the imager head with respect to the flexible cable while precluding axial compression of the coiled wire resulting in individual coil-to-coil contact. A signal carrier is disposed in a central cavity of the axially incompressible member for passage through the articulating member.

In still other embodiments, a remote image viewing system using an articulating member disposed between a flexible cable and an imager head includes a flexible cable and an imager head for illuminating an object. An articulating member is disposed between the flexible cable and the imager head. The articulating member includes a spring having multiple coils of wire defining a central cavity, and a substantially axially incompressible member freely positioned in the central cavity of the spring. The incompressible member permits angular deflection of the spring and the imager head with respect to the flexible cable while precluding coil-to-coil contact between any of the coils of the spring. A remote display device is connected to the flexible cable opposite to the imager head and provides a view screen to remotely view the object.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.

Figure 1 is a right front perspective view of an imager device having an articulating imager of the present disclosure;

Figure 2 is a left front perspective view of area 2 of Figure 1;

Figure 3 is a front elevational view of the articulating member of Figure 1 following bending;

Figure 4 is a cross sectional top plan view taken at section 4 of Figure 2;

Figure 5 is a cross sectional top plan view similar to Figure 4 of another embodiment of the articulating member;

Figure 6 is a left rear perspective view of the imager head and articulating member of Figure 1;

Figure 7 is a cross sectional front elevational view taken at section 7 of Figure 6;

Figure 8 is a front elevational view of another embodiment of a coiled spring of the present disclosure; and

Figure 9 is a cross sectional top plan view similar to Figure 4 of another embodiment of the articulating member.

Corresponding reference numerals indicate corresponding parts throughout the several views of the drawings.

### DETAILED DESCRIPTION

Example embodiments will now be described more fully with reference to the accompanying drawings.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a", "an" and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on", "engaged to", "connected to" or "coupled to" another element or layer, it may be directly on, engaged, connected or coupled to the other element or layer, or intervening elements or layers may be present. In contrast, when an element is referred to as being "directly on," "directly engaged to", "directly connected to" or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath", "below", "lower", "above", "upper" and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

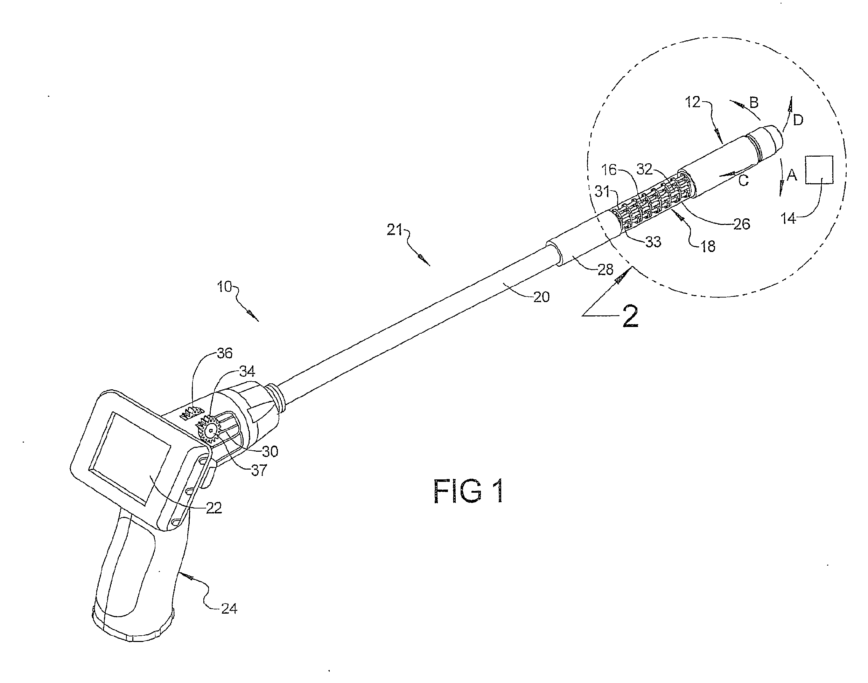

Referring to Figure 1, an imager device 10 includes an imager head 12 which transmits light from its own light source (such as an LED) to a surrounding area near the imager head 12, and also includes a light receiving member which receives the light reflected from an object 14 as an image and converts the image to an analog or digital electrical signal. The electrical signal is transmitted from imager head 12 via a flexible fiber optic line or wire bundle defining a signal carrier 16, which is protected within a flexible articulating member 18, and through a flexible cable 20 for viewing on a view screen 22 of a remote display device 24. A flexible protective cover 26 wraps the elements of articulating member 18 and protects them from environmental conditions. A connecting tube 28 can be positioned between articulating member 18 and flexible cable 20 to transition and guide a first control wire 30 and a second control wire 32 which are slidably received throughout both articulating member 18 and flexible cable 20.

Providing the ability to remotely articulate imager head 12 provides increased ability to return the image of object 14 to the remote display device 24. To accomplish this, the first control wire 30 can be manipulated to rotate imager head 12 with respect to both flexible cable 20 and connecting tube 28 in a first plane represented by rotation arrows "A" and "B" by operator rotation of a first control wheel 34 provided with remote display device 24. The second control wire 32 can be manipulated to rotate imager head 12 with respect to both flexible cable 20 and connecting tube 28 in a second plane represented by rotation arrows "C" and "D" (toward and away from the viewer as seen in Figure 1) by operator rotation of a second control wheel 36 provided with remote display device 24. By simultaneously rotating both first and second control wheels 34, 36 imager head 12 can be rotated in multiple planes, for example to direct imager head 12 toward object 14. Flexible cable 20 can therefore be bent as necessary to roughly position imager head 12 proximate to object 14, and then imager head 12 can be directed more specifically at object 14 using the secondary flexibility provided by articulating member 18.

Each of the control wires 30, 32 are looped about a pulley associated with one of the first or second control wheels 34, 36. For example, first control wire 30 is looped about a pulley 37 connected to and rotated by rotation of first control wheel 34. A second pulley 39 (not visible in this view) is similarly provided with second control wheel 36. First control wire 30 is therefore divisible into a first control wire first portion 31 and a first control wire second portion 33. The first and second portions 31, 33 of first control wire 30 are fixed to imager head 12 at opposite sides of imager head 12. Pulling first portion 31 toward remote display device 24 will reduce a length of first portion 31 between imager head 12 and pulley 37, causing rotation of imager head 12 about rotation arrow "A". Second portion 33 will simultaneously lengthen to permit this bending motion. Oppositely rotating first control wheel 34 (and therefore pulley 37) will reduce a length of second portion 33 and lengthen first portion 31, providing rotation of imager head 12 about rotation arrow "B". Second control wire 32 is similarly configured to second control wheel 36 and similarly operated to control motion of imager head 12 about either rotation arrow "C" or "D", and is therefore not further described herein.

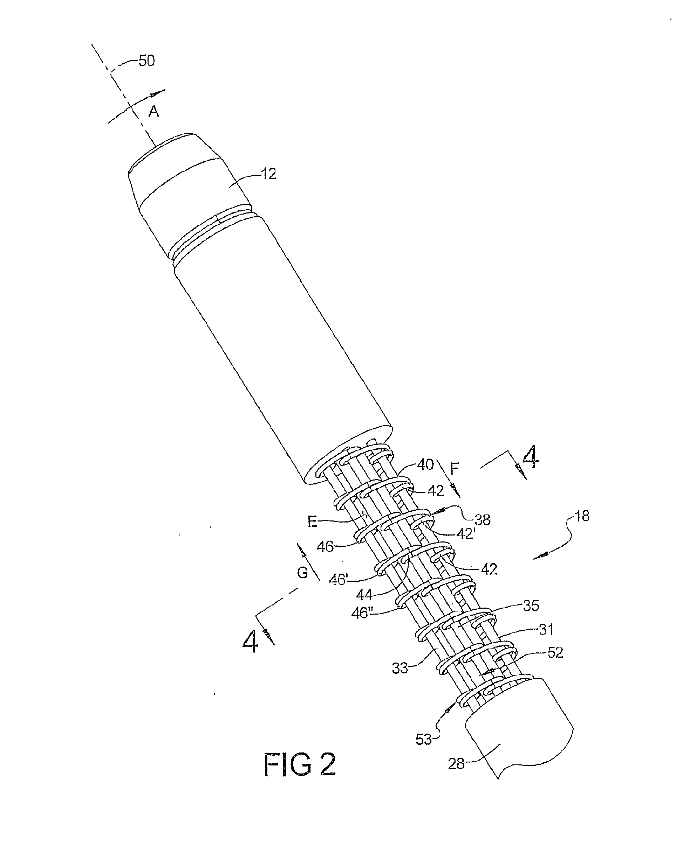

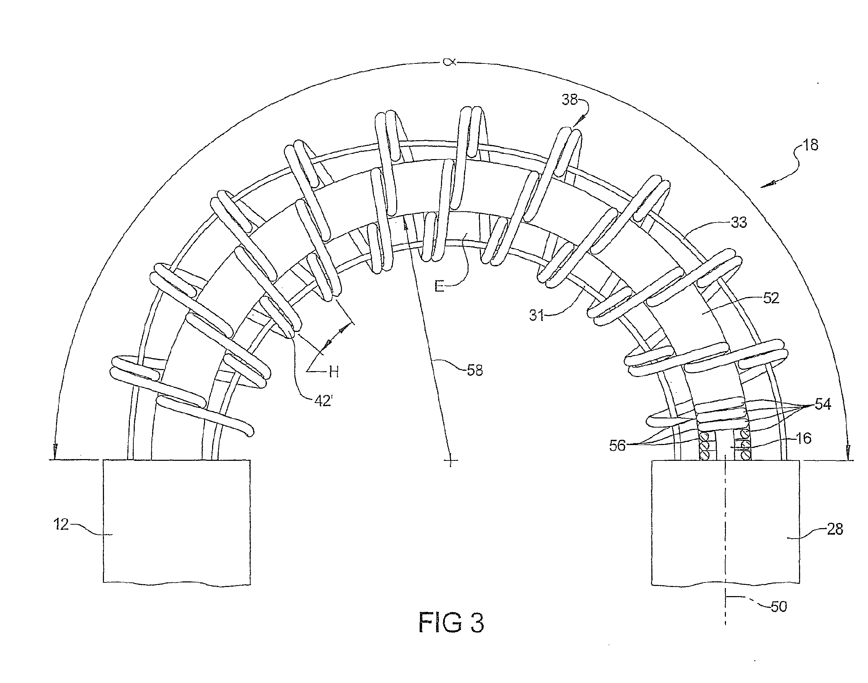

Referring to Figure 2, flexible protective cover 26 is not shown for clarity. Articulating member 18 includes a spring 38 which is a continuous group of wire coils 40 that can have a generally circular shape when viewed from the end which is shown and described in reference to Figure 3. According to several embodiments, a repeating pattern of individual smaller diameter hoops 42, 44, 46, 48 (hoops 48 are not visible in this view) of wire coils 40 extend inward into a central cavity "E" of spring 38 and are positioned with successive hoops (e.g., 42, 44) rotated in increments of 90 degrees with respect to the next or preceding hoop with respect to a longitudinal axis 50. First and second portions 31, 33 of first control wire 30 are shown extending through 180 degree oppositely positioned ones of the hoops. In the exemplary embodiment first portion 31 freely extends through hoops 42, and second portion 33 freely extends through hoops 46. First and second portions 35, 35' (only first portion 35 is visible in this view) of second control wire 32 are also shown extending through 180 degree oppositely positioned ones of the hoops. Material for control wires 32, 34 can be thin gauge steel wire, or a plastic material that exhibits limited axial extension in tension. In the exemplary embodiment shown first portion 35 freely extends through hoops 44, and second portion 33 (not visible) freely extends through hoops 48 (not visible). Imager head 12 can be manipulated for example by pulling on or reducing the length of first portion 31 of first control wire 30 in a direction "F" while simultaneously lengthening second portion 33 in an opposite direction "G" to move imager head 12 about rotation arrow "A".

According to several embodiments, the articulating member 18 is disposed between flexible cable 20 and imager head 12 of a borescope 21 and includes spring 38 having multiple wire coils 40 defining a central cavity "E". A substantially axially incompressible member 52 is freely positioned in the central cavity "E" of the spring 38. The axially incompressible member 52 permits angular deflection of the spring 38 and the imager head 12 with respect to the flexible cable 20 while precluding coil-to-coil contact between any of the wire coils 40, 40' of the spring 38. The axially incompressible member is prevented from contacting an outer coil portion 53 of spring 38 in the straight position shown or in a bent position shown and described in reference to Figure 3.

Referring to Figure 3, spring 38 provides an axial spatial separation "H" between the consecutive hoops such as hoops 42, 42' in a bent position of spring 38 to permit multi-planar movement of imager head 12 described in reference to Figure 1. Spatial separation "H" between successive ones of the hoops of a single group, such as hoops 42, 42' prevents coil-to-coil contact between any successive ones of the hoops during bending of spring 38. This permits a bending angle α of at least 180 degrees for imager head 12 with respect to connecting tube 28. Axial clearance of the hoops is provided for imager head 12 to move using articulating member 18 to effectively direct its view back toward the operator, providing at least 180 degrees of bending from the null or non-deflected position shown in Figure 2. An axially incompressible member 52 is co-axially disposed on longitudinal axis 50 and remains centrally disposed within spring 38 throughout the full bending range of spring 38. According to several embodiments, member 52 can be an extension spring having multiple coil windings 54 with inner coil ends 56 in continuous contact in all bending positions of member 52. The axial incompressibility of member 52 maintains a spatial separation "H" down to a minimum inner bend radius 58 of member 52. According to several embodiments, the use of an extension spring for member 52 provides a hollow central core within which is disposed signal carrier 16. In other embodiments, member 52 is a solid cross-section flexible tube with signal carrier 16 positioned outside of member 52 but still within inner space "E" of spring 38.

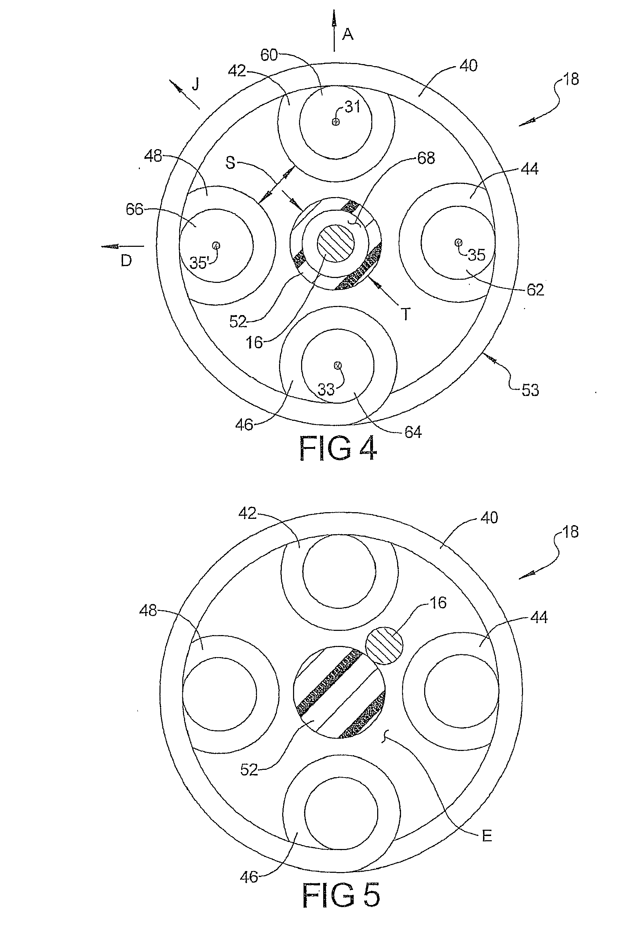

Referring to Figure 4, first and second portions 31, 33 of first control wire 30 extend through opposed passages 60, 64 of hoops 42, 46 respectively, and first and second portions 35, 35' of second control wire 32 extend through opposed passages 62, 66 of hoops 42, 46 respectively. As previously described, pulling one of the control wires (e.g., toward the viewer) such as first portion 31 in passage 60 of hoops 42 causes articulating member 18 to bend in the direction of first rotation arrow "A". The length of the second portion 33 of first control wire 30 in passage 64 of hoops 46 increases (away from the viewer) to permit this bending motion in the first plane, while second control cable 32 in passages 62, 66 of hoops 44, 48 is not affected. If combined operation of first and second control wires 30, 32 is performed multiple planes of movement of articulating member 18 is possible. For example, if both first portion 31 of first control wire 30 and second portion 35' of second control wire 32 are pulled an equal amount (e.g., toward the viewer as shown in Figure 4), articulating member 18 will displace in the direction of rotation arrow "J".

Referring again to Figures 3 and 4, when a coiled extension spring is used as member 52, an internal passageway 68 is available to receive signal carrier 16. As articulating member 18 bends, because a portion of all the coils of member 52 are in contact with each other, the non-compressibility in an axial direction of member 52 (or the tubular shaped member in its place), prevents compression of articulating member 18. This effect is further applicable when articulating member 18 is bent in multiple directions throughout its length, because member 52 prevents hoop-to-hoop compression of spring 38, therefore the overall length of articulating member 18 is not reduced during bending, and the friction of moving parts such as the sliding motion of first and second control wires 30, 32 is minimized. Using a hollow member such as an extension spring for member 52 provides two benefits. First, signal carrier 16 positioned within the inner cavity of the extension spring does not experience separate twisting motion, and second, the biasing force of an extension spring as it is deflected from its axial position assists in returning imager head 12 to its original, non-deflected position. As previously noted, the axially incompressible member is prevented from contacting an outer coil portion 53 of spring 38. This is accomplished by maintaining a maximum spacing "S" between the closest points of contact of any successive ones of the hoops, such as hoops 46, 48 as shown. Maximum spacing "S" is smaller than a diameter "T" of axially incompressible member 52, preventing axially compressible member 52 from directly contacting outer coil portion 53.

Referring to Figure 5, the hollow extension spring of member 52 is shown replaced by a solid member 52', such as a flexible plastic rod. In these embodiments signal carrier 16 cannot be extended within the internal diameter of the solid member. Signal carrier 16 will therefore be positioned within central cavity "H" co-extensive with the member 52. Using a hollow member such as an extension spring for axially incompressible member 52 provides two benefits. First, signal carrier 16 positioned within axially incompressible member 52 does not experience separate twisting motion, and the bias force of axially incompressible member 52 assists in returning imager head 12 to its original, non-deflected position.

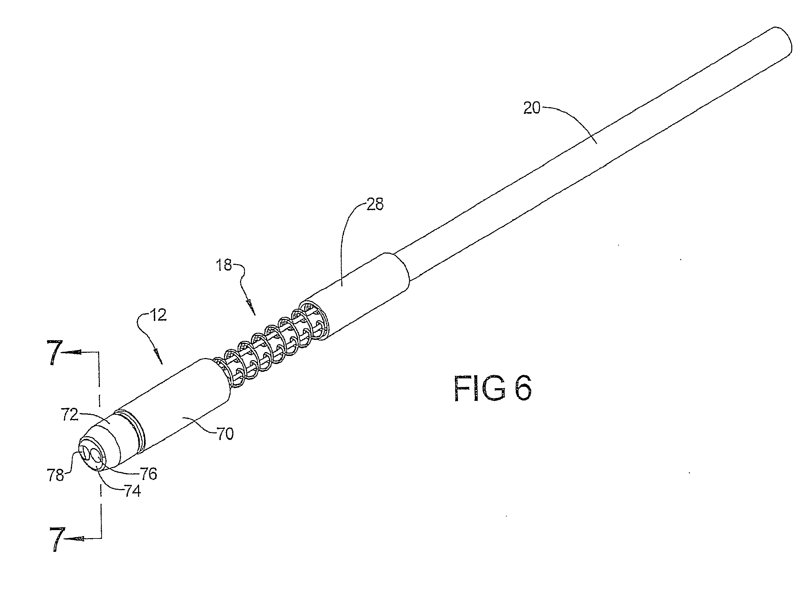

Referring to Figure 6, imager head 12 can further include a second connecting tube 70 which performs similar functions as connecting tube 28. Second connecting tube 70 further functions to receive fixed ends of the first and second portions 31, 33, 35, 35' of the first and second control wires 30, 32. A cap member 72 is releasably connected to second connecting tube 70. An end cover 74 of cap member 72 can include a light receiving window 76 such as a sapphire disc, and a light transmitting window 78 such as a light pipe.

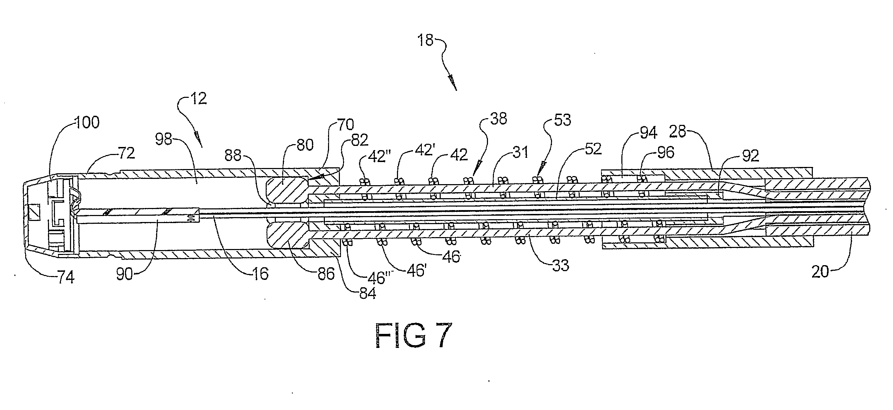

Referring to Figure 7, a bulbous end 80 of first portion 31 of first control wire 30 is retained within second connecting tube 70 by contact with a contact face 82 of a retaining end 84 of second connecting tube 70. A bulbous end 86 of second portion 33 of first control wire 30 and a bulbous end 88 of first portion 35 of second control wire 32 (not visible in this view) are similarly retained by retaining end 84, as well as a bulbous end (not visible in this view) of second portion 35'. Signal carrier 16 is connected to one or more circuit boards 90 to receive the electronic signal representing the object viewed. Within connecting tube 28, member 52 is retained by a retention member 92 which also serves to space the first and second control wires 30, 32 as they transition into flexible cable 20. A partial cavity 94 is also created defining an open end of connecting tube 28 within which a portion 96 of spring 38 is received and retained. A portion of signal carrier 16 received in a cavity 98 of second connecting tube 70 can include multiple expansion loops (not shown) to provide for extension or contraction of signal carrier 16 as articulating member 18 deflects. At least one light emitting diode 100 can be positioned within imager head 12 which generates light for emission by imager head 12.

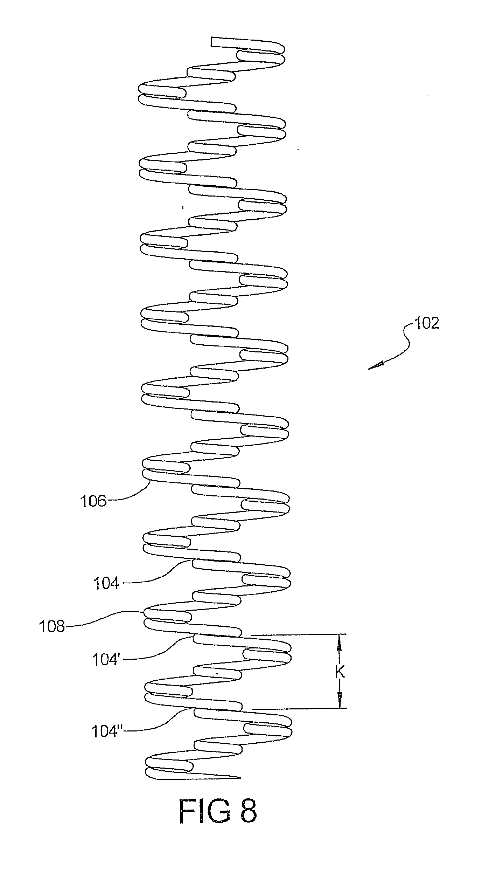

Referring to Figure 8, to reduce a total quantity of hoops, in other embodiments each hoop is created at a predetermined rotational degree arc point of a coiled spring 102 from a last hoop, and can be greater than 90 degrees, for example 450 degrees between a hoop 104 and a successive hoop 106. Successive fifth ones of the hoops of coiled spring 102 such as hoops 104, 104' coaxially align to create longitudinal passages for one of the first or second control wires. A spacing "K" between aligned ones of the hoops such as hoops 104', 104" is greater than a similar spacing between the aligned hoops of spring 38 shown and described in Figure 3. Material for a coiled wire 108 of coiled spring 102 can be a metal such as a spring steel, or a polymeric material.

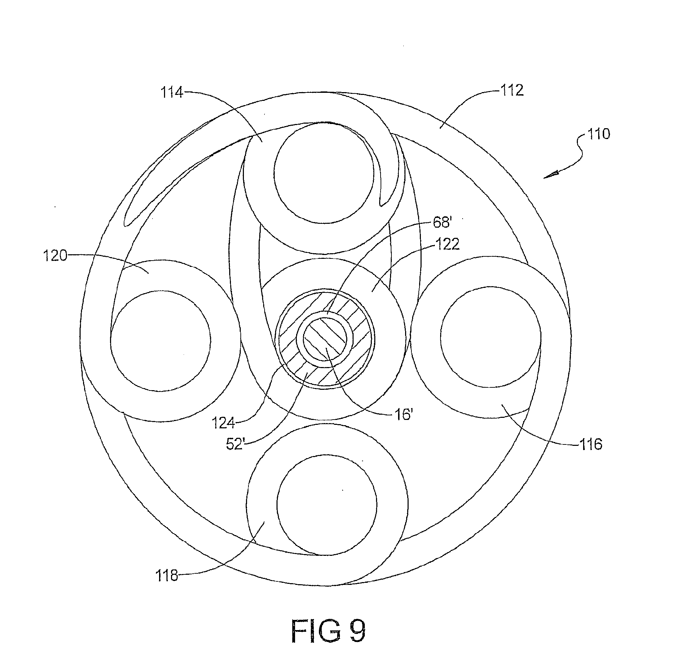

Referring to Figure 9 and again to Figure 4, a spring 110 includes a coiled wire 112 having a plurality of hoops 114, 116, 118, 120 at an inner perimeter of coiled wire 112 similar to spring 38, but is further modified to include centrally disposed hoops 122 (only one is visible in this view) at intervals matching the repeating spacing of hoops such as successive ones of hoops 114. Member 52 is centrally positioned in hoops 122 with a clearance space 124 provided to allow axial extension of member 52' during bending of spring 110. Signal carrier 16' is centrally disposed within internal passageway 68' of member 52'. Spring 110 provides for a positive central positioning of member 52 throughout a length of spring 110 to reduce friction during bending.

Articulating members of the present disclosure offer several advantages including: 1) the use of two-springs to internally support an articulating member 18 having a first outer spring and an inner extension spring or laterally flexible member which is axially incompressible; 2) the capability of the outer spring 38 and axially incompressible member 52 to bend while the axial incompressibility of axially incompressible member 52 prevents longitudinal compression of articulating member 18 between the hoops of the outer spring 10; and 4) the two flexible springs with an electrical cable being carried within the extension spring being together wrapped by a flexible material protective cover which permits the inner flexible member (and signal carrier 16) to bend and the control cables to extend and contract without contacting/abrading the protective cover.

The foregoing description of the embodiments has been provided for purposes of illustration and description. It is not intended to be exhaustive or to limit the invention. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the invention, and all such modifications are intended to be included within the scope of the invention.

## Claims

1. An articulating member disposed between a flexible cable and an imager head of a borescope, comprising:
a spring having multiple coils of wire defining a central cavity; and
a substantially axially incompressible member freely positioned in a central cavity of the spring, the incompressible member permitting angular deflection of the spring and the imager head with respect to the flexible cable while precluding coil-to-coil contact between any of the coils of the spring.

2. The articulating member of Claim 1, wherein the spring further includes:
an outer coil portion; and
multiple hoops extending inward toward the central cavity from the outer coil portion, with successive ones of the hoops positioned at regular angular increments with respect to a next or preceding hoop.

3. The articulating member of Claim 2, wherein the axially incompressible member is prevented from contacting the outer coil portion during bending of the articulating member by a spacing between any proximate ones of the multiple hoops.

4. The articulating member of Claim 2 or 3, further including a pair of control wires disposed through the flexible cable and the articulating member, each having a first portion and a second portion, the first portion of a first one of the pairs disposed through a first one of the hoop sets and the second portion of the first one of the pairs disposed through an oppositely oriented second one of the hoops sets, wherein preferably longitudinal displacement of one of the first or second portions bends the articulating member causing the angular deflection of the imager head independent of the flexible cable.

5. The articulating member of any of Claims 2 - 4, further including first and second portions of a control wire disposed in opposite ones of the hoops each connected to the imager head and being oppositely longitudinally displaceable to deflect the cause the imager head to deflect one hundred eighty degrees from an axis of the flexible cable.

6. The articulating member of any of the preceding claims, wherein the spring further includes:
an outer coil portion; and
multiple hoops within a central cavity of the outer coil portion, the multiple hoops each co-axially aligned with a longitudinal axis of the spring, with the axially incompressible member positioned within each of the multiple hoops to prevent contact between the axially incompressible member and the outer coil portion.

7. The articulating member of any of the preceding claims, further including at least one selected from the group consisting of
a signal carrier disposed throughout a length of the flexible cable positioned within the central cavity of the spring and
a light generating source positioned in the imager head for illuminating an object proximate to the imager head;

8. The articulating member of any of the preceding claims, wherein the axially incompressible member is in contact with and extends between each of a connector attached to an end of the flexible cable and the imager head.

9. The articulating member of any of the preceding claims, wherein the axially incompressible member comprises at least one selected from the group consisting of
an extension spring and
a flexible solid tubular member.

10. A remote image viewing system using an articulating member, preferably being configured as a borescope, comprising:
a flexible cable having a signal carrier disposed throughout a length of the flexible cable;
an imager head for illuminating an object proximate to the imager head; and
an articulating member according to any of the preceding claims disposed between the flexible cable and the imager head,
preferably further including a remote display device connected to the flexible cable opposite to the imager head and providing a view screen to remotely view the object,
wherein preferably the imager head includes a light emitting window to illuminate the object and a light receiving window to receive light reflected from the object,
wherein preferably individual coil-to-coil contact is precluded up to a maximum bending angle of the articulating member, the maximum bending angle being at least one hundred eighty degrees with respect to an axis of the flexible cable,
wherein preferably the imager head further includes a circuit board connected to the signal carrier for converting the image of the object into an electric signal for transfer via the signal carrier.

11. The borescope of Claim 10, wherein the first portion of a second one of the pair of control wires is disposed through a third one of the sets of hoops angularly oriented approximately ninety degrees from the first one of the groups, and the second portion of the second one of the pairs disposed through an oppositely oriented fourth one of the hoop sets angularly oriented one hundred eighty degrees with respect to the third one of the hoop sets.

12. The borescope of Claim 10 or 11, wherein the coiled wire is formed into hoops with successive ones of the hoops positioned at regular angular increments with respect to a next or preceding hoop, a control wire portion disposed in opposite ones of the hoops permitting the imager head to deflect one hundred eighty degrees from an axis of a connecting tube positioned at an end of the flexible cable.

13. The borescope of Claim 10, 11 or 12, wherein the coiled wire is formed into hoops with successive ones of the hoops positioned at regular angular increments with respect to a next or preceding hoop, the hoops being divisible into multiple hoop sets, the hoops of each hoop set being coaxially aligned.

14. The borescope of any of Claims 10 to 13, wherein the hoops are divisible into multiple hoop sets, the hoops of each hoop set being coaxially aligned.

15. The borescope of any of Claims 10 to 14, further including at least two control wires each of the control wires disposed through one of the hoop sets and fixed to the imager head, wherein a tension applied to any of the control wires angularly displaces the imager head with respect to an axis of the flexible cable.
